# EUROPÄISCHE PATENTSCHRIFT

(11) **EP 0 891 396 B1**
(45) Veröffentlichungstag und Bekanntmachung des Hinweises auf die Patenterteilung: **17.10.2001**
(21) Anmeldenummer: 97914268.4
(22) Anmeldetag: 19.03.1997
(51) Int. Cl.: C09D 5/00

(54) **PULVERBESCHICHTUNGEN MIT VOM BETRACHTUNGSWINKEL ABHÄNGIGEM FARBEINDRUCK**
POWDER COATINGS WITH COLOUR EFFECT DEPENDING ON VIEWING ANGLE
REVETEMENTS EN POUDRE AVEC EFFET COLORE DEPENDANT DE L'ANGLE D'OBSERVATION

(30) Priorität: 01.04.1996 DE 19612974
(43) Veröffentlichungstag der Anmeldung: 20.01.1999
(73) Patentinhaber: Clariant GmbH, 65929 Frankfurt am Main (DE)
(72) Erfinder: SCHÖNFELD, Axel, D-65207 Wiesbaden (DE); DIETZ, Erwin, D-61462 Königstein (DE)
(86) Internationale Anmeldenummer: EP9701368
(87) Internationale Veröffentlichungsnummer: WO9736962

(56) Entgegenhaltungen:
- EP-A- 0 344 099
- EP-A- 0 391 368
- EP-A- 0 699 722
- EP-A- 0 727 472
- DE-A- 4 416 191

## Beschreibung

Die Erfindung betrifft Pulverbeschichtungen mit einem brillanten, vom Betrachtungswinkel abhängigen Farbeindruck, im folgenden Pulvereffektbeschichtung genannt, Verfahren zu ihrer Herstellung und ihre Verwendung.

Viele Hersteller von Pigmenten und Lacken sind aus Umweltschutzgründen bestrebt, wäßrige und insbesondere lösemittelhaltige Lacke und Überzugsmittel durch lösemittelfreie Lacke und Beschichtungen zu ersetzen. Dies gelang vor allem bei unpigmentierten Systemen oder bei Systemen, die anorganische und/oder organische Absorptionspigmente enthalten. Besonders wichtig wäre der Lösemittelersatz bei Effektbasislacken, da diese Lacke systembedingt bei der Verarbeitung zur Orientierung der meist plättchenförmigen Effektpigmente niedrigviskos eingestellt sind und deshalb einen besonders hohen Lösemittelgehalt aufweisen. Bei der Herstellung von Effektbasislacken ist es bislang noch nicht gelungen, lösemittelfreie Beschichtungen herzustellen, die den anwendungstechnischen Anforderungen genügen. Von besonderem Interesse sind dabei Effektlacke mit vom Betrachtungswinkel abhängiger Farbigkeit, die als optisch wirksame Komponente plättchenförmige, cholesterische Flüssigkristallpigmente enthalten, wie sie beispielsweise in folgenden Dokumenten beschrieben werden: WO95/29961, WO 95/29962, DE 44 18 076 A1, DE 44 18 075 A1, DE 44 16 191 A1 und DE 42 40 743 A1. In diesen Anmeldungen werden Verfahren beschrieben, bei welchen im ersten Schritt plättchenförmige Teilchen hergestellt werden, die im zweiten Schritt in wäßrigen und/oder lösemittelhaltigen Lacksystemen dispergiert werden. Im dritten Schritt wird mit bekannten Verarbeitungstechnologien daraus ein Effektlack hergestellt.

In der DE 44 16 993 A1 werden Effektlackierungen beschrieben, bei denen das Pigment ohne Bindemittel appliziert werden kann. Dies ist jedoch nach den Angaben in dieser Schrift nur mit aushärtbaren flüssigkristallinen Polymeren unter Verwendung von hochsiedenden Lösemitteln möglich. Das in der DE-A-44 16 993 beschriebene Polymer basiert auf 4-(Hydroxyphenyl)(1-[3-hydroxy-2-methyl]-propyl)-sulfid als chiraler Komponente, welches in einer aufwendigen Synthese hergestellt werden muß. Die Flüssigkristallpolymere sind in Lösemitteln löslich, so daß auch hier Quellungsprobleme mit einem Klarlack auftreten, was ebenfalls zu einer Veränderung der Ganghöhe und somit zu einer Änderung der Coloristik führt. Es handelt sich hierbei auch nicht um Pigmente, wie sie vom Fachmann üblicherweise verstanden werden, da sie in vielen Lösemitteln löslich sind. Außerdem gestaltet sich bei diesen Systemen die genaue Farbeinstellung schwierig, da sie erst auf der lackierten Oberfläche des Gebrauchsgegenstandes erfolgt und kleine Temperaturunterschiede bereits zu deutlichen Farbtonunterschieden führen.

In der nicht-vorveröffentlichten EP-A1-0 727 472 werden nichtvernetzbare cholesterische flüssigkristalline Seitengruppenpolymere zur Effektbeschichtung von Gebrauchsgegenständen verwendet.

Aufgabe der vorliegenden Erfindung war es, einfach verarbeitbare Effektbeschichtungssysteme und insbesondere Effektbasislacke zu entwickeln, zu deren Verarbeitung möglichst wenig oder gar keine Lösemittel erforderlich sind.

Es wurde gefunden, daß Pulvereffektbeschichtungen mit einem vom Betrachtungswinkel abhängigen Farbeindruck überraschenderweise im wesentlichen aus einem oder mehreren cholesterischen flüssigkristallinen Polymeren, die nicht aushärtbar sind, bestehen können.

Gegenstand der vorliegenden Erfindung ist eine Pulvereffektbeschichtung mit einem vom Betrachtungswinkel abhängigen Farbeindruck, bestehend im wesentlichen aus mindestens einem nicht aushärtbaren cholesterischen flüssigkristallinen Polymer, oder im wesentlichen aus mindestens einem nicht aushärtbaren nematischen flüssigkristallinen Polymeren und mindestens einem nicht aushärtbaren cholesterischen flüssigkristallinen Polymeren, dadurch gekennzeichnet, daß das nicht aushärtbare cholesterische flüssigkristalline Polymer ein cholesterisches flüssigkristallines Seitengruppenpolymer, welches in der Hauptkette Polysiloxane, cyclische Siloxane, Polyacrylate und/oder Polymethacrylate in nicht aushärtbarer Form und in den Seitenketten mesogene Gruppen enthält, ist, oder ein cholesterisches flüssigkristallines Hauptkettenpolymer ist, welches im wesentlichen aus
a) 0 bis 99 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,5 Mol% mindestens einer Verbindung aus der Gruppe der aromatischen Dicarbonsäuren und cycloaliphatischen Dicarbonsäuren;
c) 0 bis 49,5 Mol% mindestens einer Verbindung aus der Gruppe der aromatischen Diole, cycloaliphatischen Diole und aromatischen Diamine;
d) 1 bis 40 Mol% vorzugsweise 2 bis 25 Mol% an chiralen, bifunktionellen Comonomeren; und
e) 0 bis 5 Mol% einer verzweigbaren Komponente mit mehr als 2 funktionellen Gruppen,
wobei die Summe 100 Mol% ergibt, besteht, oder eine Kombination davon ist.

Unter "nicht aushärtbar" wird verstanden, daß die in Rede stehenden Polymere so beschaffen sind, daß sie keine Vernetzungsreaktionen mit sich selber oder anderen Reaktionspartnern eingehen können, wie sie beispielsweise durch lichtinduzierte Vernetzungen bei den in DE-A- 44 16 993 verwendeten Zimtsäurederivaten stattfinden können.

Die vorliegende Erfindung betrifft insbesondere Pulvereffektbeschichtungen und Verfahren zu ihrer Herstellung, bei welchen zur Herstellung der Effektschicht keine Lösemittel und auch keine sonst üblichen Bindemittel eingesetzt werden.

Unter Effekt werden in der vorliegenden Erfindung nicht nur vom Betrachtungswinkel abhängige Selektivreflexionen im sichtbaren Bereich verstanden, sondern auch Selektivreflexionen im UV- und IR-Bereich. Die letztgenannten Selektivreflexionen sind mit dem menschlichen Auge nicht wahrnehmbar, können jedoch auf einfache Weise mit Hilfe von UV- und IR-Spektrometer bestimmt werden.

Die erfindungsgemäßen Pulvereffektbeschichtungenenthalten cholesterische flüssigkristalline Polymere (cLCPs), die eine helikale Überstruktur besitzen. Diese Überstruktur führt zum einen dazu, daß das Material nicht mehr die bei nematischen Flüssigkristallpolymeren übliche Anisotropie der mechanischen Eigenschaften aufweist. Zum anderen zeigt das Material ausgeprägte Farbeffekte. Diese beruhen auf der selektiven Reflexion des einfallenden Lichts an der helikalen Überstruktur. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine um so kürzere Wellenlänge hat, je kürzer die Ganghöhe der Helix ist. Die sich ausbildende Ganghöhe der Helix hängt im wesentlichen vom Anteil des chiralen Comonomers an der Gesamtzusammensetzung, der Art des Einbaus in das Polymer, des Polymerisationsgrads und der Struktur des chiralen Comonomers ("helical twisting power") ab. Außerdem zeigen viele Systeme noch eine mehr oder weniger ausgeprägte Temperaturabhängigkeit der Ganghöhe in der cholesterischen Phase und somit auch eine Variation der coloristischen Eigenschaften. Es ist ohne weiteres möglich, durch die Variation des Anteils des chiralen Comonomers beispielsweise ein Polymer mit einem blauen, grünen oder goldenen Farbeffekt herzustellen.

Verwendbar als cLCP sind erfindungsgemäß alle voraustehend genannten cholesterischen flüssigkristallinen Hauptkettenpolymere als auch cholesterische flüssigkristalline Seitengruppenpolymere oder kombinierte Hauptketten-/ Seitengruppenpolymere.

Cholesterische Seitengruppenpolymere sind Polysiloxane, cyclische Siloxane, Polyacrylate oder Polymethacrylate in nicht aushärtbarer Form, mit Mesogenen in den Seitengruppen. Die Mesogene in der Seitengruppe können alle dem Fachmann bekannten Strukturen, wie beispielsweise mit Cholesterin substituierte Phenylbenzoate oder Biphenole enthalten.

Cholesterische Hauptkettenpolymere werden im allgemeinen aus einer chiralen Komponente sowie aus Hydroxycarbonsäuren und/oder einer Kombination von Dicarbonsäuren und Diolen hergestellt. In der Regel bestehen die Polymere im wesentlichen aus aromatischen Bestandteilen. Es ist jedoch auch möglich, aliphatische und cycloaliphatische Komponenten, wie z.B. Cyclohexandicarbonsäure, einzusetzen.

Bei den angegebenen Prozentsätzen ist darauf zu achten, daß die dem Fachmann bekannte Stöchiometrie der funktionellen Gruppen zur Polykondensation gewährleistet ist.
Zusätzlich können die Polymere noch Komponenten mit mehr als zwei funktionellen Gruppen, wie beispielsweise Dihydroxybenzoesäuren, Trihydroxybenzole oder Trimellitsäure enthalten. Diese Komponenten wirken als Verzweigungsstelle im Polymer und dürfen nur in geringen Konzentrationen, beispielsweise 0 bis 5 Mol-%, zugegeben werden, um eine Vernetzung des Materials zu vermeiden.

Besonders bevorzugt sind cholesterische Hauptgruppenpolymere, die aus folgenden Bausteinen der einzelnen Monomergruppen aufgebaut sind:
a) Aromatische Hydroxycarbonsäuren, Aminocarbonsäuren: 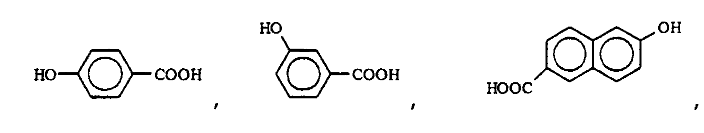 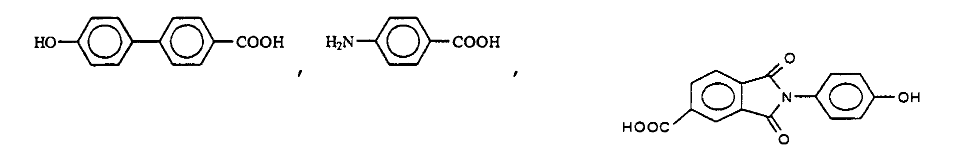
b) Aromatische Dicarbonsäuren, aliphatische Dicarbonsäuren: 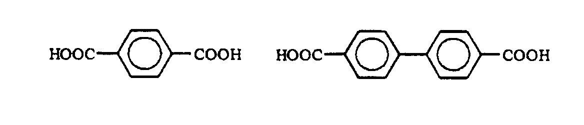 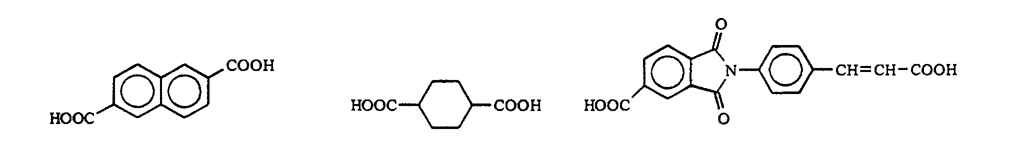 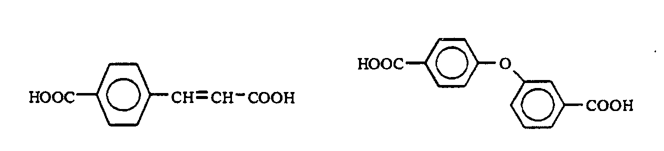 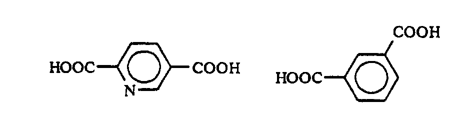 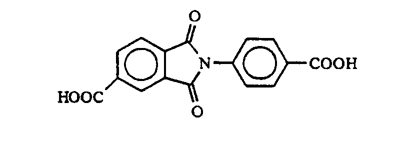
c) Aromatische Diole, Aminophenole, aromatische Diamine: 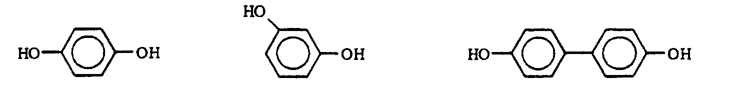 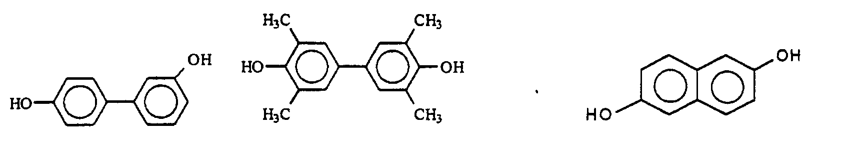 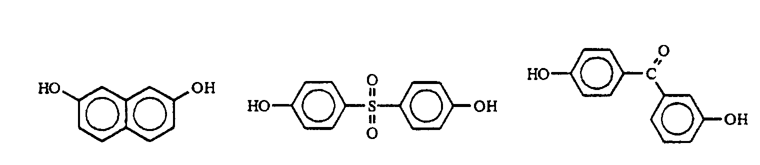 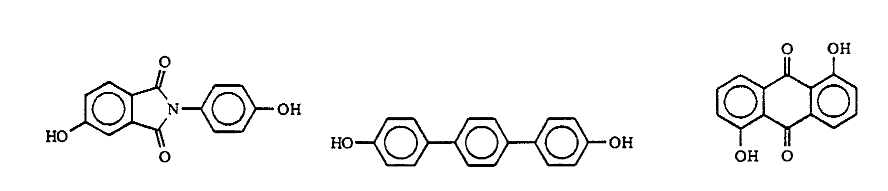 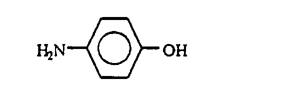 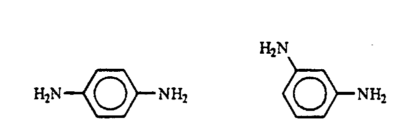
d) Chirale, bifunktionelle Monomere: 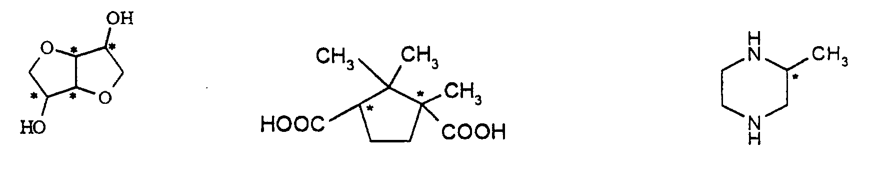 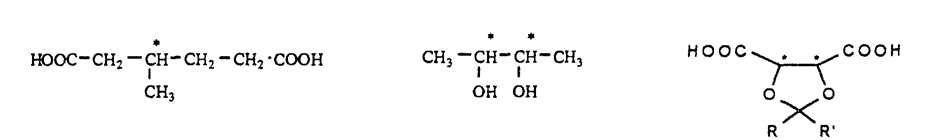 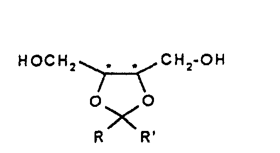 wobei R und R' jeweils unabhängig voneinander H, C₁-C₆-Alkyl oder Phenyl, vorzugsweise H oder CH₃, sind.

Insbesondere bevorzugt als cLCP sind Polymere, enthaltend Camphersäure oder/und Isosorbid als chirale Komponente sowie p-Hydroxybenzoesäure und/oder 2-Hydroxy-6-naphthoesäure und/oder Terephthalsäure und/oder Isophthalsäure und/oder Hydrochinon und/oder Resorcin und/oder 4,4'-Dihydroxybiphenyl und/oder 2,6-Naphthalindicarbonsäure.

Die chiralen Comonomere werden vorzugsweise in einer enantiomerenreinen Form eingesetzt. Bei Verwendung von Enantiomerengemischen eines Comonomers ist darauf zu achten, daß eine Enantiomerenform in einem wirksamen Überschuß vorhanden ist.

Die erfindungsgemäß eingesetzten Monomere können entweder direkt eingesetzt werden, oder es können auch zweckmäßige Vorstufen verwendet werden, die sich unter den nachfolgenden Reaktionsbedingungen zu den gewünschten Monomeren umsetzen. So kann beispielsweise statt N-(4-Hydroxyphenyl)trimellitimid Aminophenol und Trimellitsäureanhydrid eingesetzt werden.

Die Polykondensation kann über alle dem Fachmann bekannten Polykondensationsverfahren durchgeführt werden. Beispielsweise eignet sich die Schmelzkondensation mit Acetanhydrid, die in EP-A-0 391 368 beschrieben ist.

Bevorzugt erfolgt die Verknüpfung der Monomere über Esterbindungen (Polyester) und/oder über Amidbindungen (Polyesteramid/Polyamid), jedoch kann die Verknüpfung auch über andere dem Fachmann bekannte Verknüpfungsarten erfolgen, beispielsweise Polyesterimid.

Bei der Auswahl der Monomerbausteine ist darauf zu achten, daß die dem Fachmann bekannte Stöchiometrie der funktionellen Gruppen gewährleistet ist, d. h. daß funktionelle Gruppen, die miteinander in der Polykondensationsreaktion reagieren, in entsprechenden Verhältnissen eingesetzt werden. Beispielsweise bei Verwendung von Dicarbonsäuren und Diolen muß eine der Anzahl an Carboxylgruppen entsprechende Anzahl an Hydroxylgruppen vorhanden sein. In einer weiteren Ausführungsform ist es jedoch möglich, zur Variation des Molekulargewichts Monomere aus den Gruppen b) bis d) oder die aufgeführten Komponenten mit mehr als zwei funktionellen Gruppen in einem für die Erzielung eines definierten Molekulargewichts notwendigen Überschuß einzusetzen. Weiterhin kann das Molekulargewicht durch die Verwendung monofunktioneller Monomere beeinflußt werden.

Anstelle der Carbonsäuren können auch andere dem Fachmann bekannte Carbonsäurederivate, wie beispielsweise Säurechloride oder Carbonsäureester eingesetzt werden. Anstelle der Hydroxykomponenten können auch entsprechende Hydroxyderivate, wie beispielsweise die acetylierten Hydroxyverbindungen, eingesetzt werden.

Die beschriebenen Polymerbausteine können noch weitere Substituenten, wie beispielsweise Methyl, Methoxy oder Halogen, enthalten.

Es ist auch möglich, cholesterische flüssigkristalline Polymere durch Mischen von farblosen und/oder gefärbten nematischen und/oder cholesterischen flüssigkristallinen Polymeren herzustellen. Dabei kann der Farbton der Pulvereffektbeschichtung in weiten Grenzen variiert und exakt eingestellt werden.

Als nematische flüssigkristalline Polymere kommen insbesondere solche in Betracht, die p-Hydroxybenzoesäure und/oder 2-Hydroxy-6-naphthoesäure; 2,6-Naphthalin-dicarbonsäure, Terephthalsäure und/oder Isophthalsäure; Hydrochinon, Resorcin und/oder 4,4'-Dihydroxybiphenyl enthalten.

Bei der Verwendung von Hauptkettenpolymeren weisen die cLCPs in einer bevorzugten Ausführungsform eine sehr geringe Löslichkeit auf, so daß ihre Molekulargewichte nicht mit üblichen Methoden (GPC, Lichtstreuung) bestimmt werden können. Als Maß für das Molekulargewicht kann die intrinsische Viskosität der Polymere in einer Lösung aus Pentafluorphenol/ Hexafluorisopropanol herangezogen werden. Geeignet sind Polymere mit einer intrinsischen Viskosität zwischen 0,1 dl/g und 10 dl/g.

Die bevorzugten Hauptkettenpolymere besitzen eine hohe thermische Stabilität und aufgrund ihrer Schwerlöslichkeit eine hervorragende Stabilität gegenüber den in Lacken verwendeten Lösemitteln. Sie machen deshalb Vernetzungsreaktionen nach dem Aufbringen auf die Substratoberfläche überflüssig. Dadurch gestaltet sich nicht nur die Applikation, sondern auch die Synthese erheblich einfacher.

Gegenstand der Erfindung ist auch ein Verfahren zur Herstellung einer Pulvereffektbeschichtung mit einem vom Betrachtungswinkel abhängigen Farbeindruck, dadurch gekennzeichnet, daß die nicht aushärtbaren, cholesterischen flüssigkristallinen Polymere und gegebenenfalls die nicht aushärtbaren nematischen flüssigkristallinen Polymere direkt bei deren Synthese oder in einem nachgeschalteten Prozess in ein feinteiliges Pulver überführt werden, welches mit Hilfe eines Pulverlackierverfahrens auf das zu beschichtende Objekt aufgebracht und durch Temperaturbehandlung in einen Film mit einem vom Betrachtungswinkel abhängigen Farbeindruck überführt wird.

Fallen die cLCPs und gegebenenfalls LCPs nicht bereits bei der Synthese als feinteiliges Pulver an, so müssen die cLCPs bzw. LCPs nach der Synthese in ein feinteiliges Pulver überführt werden. Wird die Synthese als Schmelzkondensation durchgeführt, so bietet sich nach der Synthese als erster Zerkleinerungsschritt eine Strang- oder Bandextrusion an. Die dabei erhaltenen Stränge oder Bänder lassen sich in bekannter Weise mit Schnitzlern oder Granulatoren in Chips oder Stranggranulate überführen. Die Polymere lassen sich jedoch auch auf anderen Wegen isolieren und anschließend durch Schneid-und Sägeprozesse grob zerkleinern.

Zur weiteren Zerkleinerung bieten sich Mahlaggregate aller Arten und Ausführungsformen an. Dabei kann die erforderliche Endfeinheit in einem Verfahrensschritt oder auch in mehreren Teilschritten in gleichen oder verschiedenen Mühlentypen erreicht werden. Wird durch den ausgeführten Mahlprozess nicht direkt die gewünschte Mindestfeinheit und Korngrößenverteilung erzielt, so ist es angebracht, das Mahlgut während des Mahlprozesses oder nach dem Mahlprozess Sieb- oder Klassifizierprozessen zu unterwerfen, um die gewünschte Mindestfeinheit zu garantieren und eine gewünschte optimale Korngrössenfraktion zu erhalten. Als Mahlaggregate sind beispielsweise geeignet Schwing-, Scheibenschwing-, Scheiben-, Planeten-, Fliehkraft-, Mörser-, Kugel-, Schlagkreuz-, Schlagrotor-, Schneid-, Hammer-, Messer-, Rotor-Stator-, Prallteller-, und insbesondere Ultra-Zentrifugal-, Universal-, Stift- und Luftstrahlmühlen. In speziellen Fällen kann auch eine Naßmahlung in Kugel-, Sand-, Schwing- oder Perlmühlen durchgeführt werden.

Eine Mahlung der cLPCs und gegebenenfalls LCPs kann unterbleiben, wenn die cLPCs bzw. LCPs durch Polymerisation in einer emulgierten oder dispergierten Phase hergestellt werden, wobei ein sehr feinteiliges Pulver erhalten wird.

Die erfindungsgemäßen Pulvereffektbeschichtungen lassen sich nach folgenden bevorzugten Methoden applizieren:

Das bei der Synthese des Polymeren oder nach einem Mahlverfahren anfallende Polymerpulver wird beim eigentlichen Versprühprozess elektrostatisch aufgeladen. Dies geschieht beim Corona-Verfahren durch Vorbeiführen des Pulvers an einer geladenen Corona. Dabei wird das Pulver selbst aufgeladen. Beim triboelektrischen bzw. elektrokinetischen Verfahren wird vom Prinzip der Reibungselektrizität Gebrauch gemacht. Das Pulver erhält im Sprühgerät eine elektrostatische Aufladung, die der Ladung des Reibungspartners, im allgemeinen ein Schlauch oder ein Sprührohr (beispielsweise aus Polytetrafluorethylen), entgegengesetzt ist. Die elektrostatische Aufladung führt zu einem hohen Abscheidegrad des Pulvers auf dem zu beschichtenden Gegenstand. Nach dem Auftragprozess auf das Objekt wird die Pulverschicht auf Temperaturen oberhalb des Erweichungspunktes des Pulvers erhitzt, bei welchen die Polymere einen homogenen Film bilden und die helikalen Überstrukturen ausbilden. Die Temperatur, bei welcher die Ausbildung der helikalen Struktur beginnt, wird im folgenden als Chiralisierungstemperatur bezeichnet.

Die speziellen optischen Eigenschaften der erfindungsgemäßen Pulvereffektbeschichtungen werden erst beobachtet, wenn die Moleküle oberhalb der Chiralisierungstemperatur des Polymeren die helikale Struktur ausbilden. Der Übergang in die cholesterische Phase erfolgt in vielen Fällen bereits bei der Synthese der Polymeren. Die Wellenlänge der Selektivreflexion der erfindungsgemäß eingesetzten cLCPs wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der beschichteten Substrate läßt sich die Ganghöhe der Helix und somit die Selektivreflexion dauerhaft eingefrieren. Beim langsamen Abkühlen muß mit coloristischen Veränderungen gerechnet werden. Im allgemeinen werden auch auf diese Weise gefärbte Substrate erhalten. Es ist jedoch schwierig, die Endcoloristik vorherzubestimmen. Wird das abgekühlte Substrat erneut erhitzt, so lassen sich neue oder auch wieder die gleichen Ganghöhen der Helix und somit die Wellenlänge der Selektivreflexion einstellen. Durch diesen Vorgang kann die Coloristik des beschichteten Substrats auf einfache Weise variiert und korrigiert werden. Für die Anwendung in der Praxis ist es wichtig, daß der Schmelzpunkt und die Chiralisierungstemperatur des Polymeren oberhalb der Gebrauchstemperatur des beschichteten Substrats liegen.

Begünstigt werden kann die Ausbildung der helikalen Struktur neben der Temperatur und der Einwirkung von Scherkräften durch Untergründe mit polymeren Schichten, wie beispielsweise Polyvinylalkohol, Cellulosederivate und Polyimide. Der Orientierungsprozess der Polymermoleküle kann je nach Struktur der Polymeren auch durch elektrische und magnetische Felder positiv beeinflußt werden.

Eine weitere, bevorzugte Möglichkeit zur Beschichtung von Objekten mit pulverförmigen Stoffen ist das Flammspritzverfahren. Bei diesem Verfahren wird das Pulver mit einem Trägergas (z. B. in einem Wirbelbett) fluidisiert und der zentralen Düse einer Flammspritzpistole zugeführt. Gleichzeitig wird in der Flammspritzpistole ein Brenngas/Sauerstoffgemisch erzeugt, welches in vielen kleinen um das Zentrum herum ringförmig angeordneten Flämmchen verbrannt wird. Dabei schmelzen die pulverförmigen Teilchen auf und werden anschließend auf dem zu beschichtenden Objekt als Tröpfchen abgeschieden, die im Verlauf des Spritzprozesses zu einem Film zusammenfließen. Dieses Verfahren bietet den besonderen Vorteil, daß der Schmelzvorgang in den Versprühprozess integriert ist, so daß in einem Arbeitsschritt der Auftrag der Beschichtung auf den Gegenstand und die Filmbildung erfolgen kann.

Eine weitere bevorzugte Ausführungsform zur Pulverbeschichtung ist das Wirbelsinterverfahren. Hierzu wird in einem geeigneten Behälter mit Hilfe eines Trägergases und dem erfindungsgemäßen Polymerpulver eine Wirbelschicht erzeugt. Das zu beschichtende Objekt wird in einer separaten Wärmekammer auf die für die Beschichtung notwendige Temperatur erhitzt, und nach Erreichen dieser Temperatur wird es für eine bestimmte Zeit in die Wirbelschicht eingetaucht. Dabei bleiben pulverförmige Teilchen an der Objektoberfläche haften, schmelzen auf, fließen zu einem Film zusammen und bilden die helikale Struktur aus. In manchen Fällen ist es vorteilhaft, das beschichtete Objekt einer weiteren Temperaturbehandlung zu unterziehen, um die Filmbildung und die Orientierung der Polymermoleküle zu verbessern. In anderen Fällen läßt man das Objekt an der Luft abkühlen oder schreckt es mit Wasser ab. Auch dieses Verfahren bietet den besonderen Vorteil, daß der Schmelzvorgang in den Beschichtungsprozess integriert ist, so daß in einem Arbeitsschritt der Auftrag der Beschichtung auf den Gegenstand, die Orientierung der Polymermoleküle und die Filmbildung erfolgen kann.

Bei allen beschriebenen Pulverbeschichtungsverfahren und insbesondere beim Wirbelsinter- und Flammspritzverfahren ist die Teilchenform und damit die Rieselfähigkeit des Pulvers sowie die Korngrößenverteilung des Pulvers von großer Bedeutung. Bevorzugt sind Teilchen, die der Kugelform möglichst nahe kommen und die eine enge Korngrößenverteilung aufweisen. Kugelförmige Teilchen werden auf einfache Weise bei Prozessen erhalten, bei welchen die Polymerisation in einer emulgierten oder dispergierten Phase durchgeführt wird. Bei den Mahlprozessen werden je nach eingesetztem Mühlentyp engere oder breitere Korngrößenverteilungen erhalten. In einigen Fällen ist es vorteilhaft, einen Sieb-, Klassifizier- oder Sichtungsprozess an die Mahlung anzuschließen, um eine möglichst enge Korngrößenverteilung zu erreichen. In anderen Fällen ist es vorteilhaft, zuerst ein sehr feinteiliges Pulver herzustellen, welches hinterher gezielt zu der gewüschten Teilchengröße agglomeriert werden kann.

Die gewünschte Kornfeinheit ist ausschlaggebend für die Schichtdicke der Pulvereffektbeschichtung, die Art des zu beschichtenden Objekts und das angewandte Applikationsverfahren. Werden auf dem zu beschichtenden Objekt dünne Lackschichten gewünscht, so ist eine mittlere Teilchengröße des Pulvers zwischen 1 und 100 *µ*m, vorzugsweise zwischen 15 und 80 *µ*m, anzustreben. Werden dicke Schichten auf dem Objekt gewünscht, wie sie normalerweise beim Wirbelsintern und Flammspritzen appliziert werden, so ist eine mittlere Teilchengröße zwischen 80 und 300 *µ*m, vorzugsweise 100 bis 250 *µ*m, vorteilhaft. Beim Wirbelsintern und Flammspritzen ist auf die Einhaltung der Korngrößengrenzen besonders zu achten. Zu kleine Teilchen werden durch die hohen Flammtemperaturen zu stark erhitzt und verkohlen oder werden durch den Gasstrom weggeblasen. Zu grobe Teilchen werden dagegen nicht vollständig aufgeschmolzen und können sich bei der anschließenden Filmbildung nicht optimal orientieren. In Ausnahmefällen kann es jedoch auch vorteilhaft sein, eine außerhalb dieses Bereichs liegende Korngrößenverteilung zu verwenden.

Die erfindungsgemäßen Pulvereffektbeschichtungen können auf die unterschiedlichsten Substrate aufgebracht werden. Dies können beispielsweise Gegenstände aus natürlichen und synthetischen Materialien wie beispielsweise Holz, Kunststoffe, Metall oder Glas sein. Wird die Effektbeschichtung ohne eine Vorbeschichtung aufgebracht, so empfiehlt sich ein Auftrag in einer Schichtdicke, die den Untergrund abdeckt. Es können selbstverständlich auch mehrere Schichten aufgetragen oder semitransparente Beschichtungen hergestellt werden. Besonders bevorzugt ist die Beschichtung der Karosserie oder von Karosserieteilen von Kraftfahrzeugen.

In bevorzugten Fällen wird die Pulvereffektbeschichtung auf Metall- oder Kunststoffuntergründe aufgebracht. Diese sind meistens vorbeschichtet. Das heißt, Kunststoffsubstrate können mit einer Kunststoffgrundierung versehen sein, und metallische Substrate besitzen im allgemeinen eine elektrophoretisch aufgebrachte Grundierung und gegebenenfalls eine oder mehrere weitere Lackschichten wie beispielsweise eine Füllerschicht.

Besonders bevorzugt sind dunkle Untergründe. Unter Untergrund ist in diesem Zusammenhang nicht nur ein an seiner Oberfläche mit einer dunklen Lackschicht versehenes Substrat zu verstehen, sondern auch ein in sich dunkel gefärbtes Substrat, beispielsweise ein Kunststoffsubstrat oder ein mit einer dunklen Oxidschicht überzogenes Metallsubstrat. Beispiele für dunkle Lackschichten sind elektrophoretisch oder durch Spritz- oder Pulverlackierung aufgebrachte Grundierungen, Kunststoffgrundierungen, Füller- und Steinschlagschutzschichten oder auch unifarbene Basis- und Decklackschichten. Beispiele für dunkle Untergründe sind dunkelrot, dunkelblau, dunkelgrün, dunkelbraun, dunkelgrau und insbesondere schwarz. Die erfindungsgemäßen Pulverbeschichtungen können auch auf hellen Untergründen oder in deckenden Schichten appliziert werden. Dabei kommt jedoch der vom Betrachtungswinkel abhängige Farbeindruck nur abgeschwächt zum Ausdruck.

Die erfindungsgemäßen Pulvereffektbeschichtungen können nach üblichen Methoden mit einem Klarlack überzogen werden. Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und insbesondere Pulverlacke eingesetzt werden. In manchen Fällen kann es zweckmäßig sein, die Klarlackschicht etwas dicker zu wählen oder 2 Klarlackschichten aus gleichen oder verschiedenen Flüssigklarlacken oder Pulverklarlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Den erfindungsgemäßen Pulvereffektbeschichtungen können vor oder während der Applikation weitere Stoffe zugesetzt werden, wie sie bei Kunststoffverarbeitungs-, Lackier- und Beschichtungsverfahren üblich sind. Zu erwähnen sind beispielsweise nicht flüssigkristalline Polymere, Ladungssteuermittel, Absorptions- und Interferenzpigmente, Füllstoffe, Haftvermittler, Lichtschutzmittel, Stabilisatoren sowie Stoffe, die die Rheologie und den Verlauf beeinflussen.

Die erfindungsgemäßen Pulvereffektbeschichtungen lassen sich mit wenigen, einfachen Prozeßschritten, in hoher Ausbeute und ohne den Anfall eines nicht wiederverwertbaren Abfalls herstellen und nach allen technisch bekannten Verfahren zur Pulverbeschichtung ohne den Einsatz von Lösemitteln oder sonst üblichen Bindemitteln applizieren. Sie zeichnen sich neben der einfachen Verarbeitbarkeit durch eine hohe Temperaturstabilität, Lösemittel- und Chemikalienresistenz und sehr brillante Farbtöne mit ausgeprägter Abhängigkeit des Farbeindrucks vom Betrachtungswinkel aus.

In den nachfolgenden Beispielen bedeuten Teile Gewichtsteile.

### Beispiel A1: Synthese eines cLCP:

2821 Teile 2-Hydroxy-6-naphthoesäure, 6215 Teile 4-Hydroxy-benzoesäure, 3724 Teile 4,4'-Dihydroxibiphenyl und 3203 Teile (R)-(+)-3-Methyladipinsäure werden in einem Reaktor mit 10460 Teilen Essigsäureanhydrid versetzt und mit einem leichten Stickstoffstrom durchspült. Die Mischung wird innerhalb von 15 Minuten auf 140 °C erhitzt und diese Temperatur für 20 Minuten gehalten. Anschließend wird die Temperatur innerhalb von 150 Minuten auf 320 °C erhöht und die Schmelze 15 Minuten bei dieser Temperatur gehalten. Ab ca. 220 °C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante goldene Farbe, die bei schrägem Betrachtungswinkel grünlich erscheint.

### Beispiel A2: Synthese eines cLCP:

14110 Teile 2-Hydroxy-6-naphthoesäure, 31077 Teile 4-Hydroxy-benzoesäure, 18621 Teile 4,4'-Dihydroxibiphenyl und 3203 Teile (1R,3S)-(+)-Camphersäure werden in einem Reaktor mit 52580 Teilen Essigsäureanhydrid versetzt und mit einem leichten Stickstoffstrom durchspült. Die Mischung wird innerhalb von 15 Minuten auf 140 °C erhitzt und diese Temperatur für 20 Minuten gehalten. Anschließend wird die Temperatur innerhalb von 150 Minuten auf 330 °C erhöht und die Schmelze 15 Minuten bei dieser Temperatur gehalten. Ab ca. 220 °C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante goldene Farbe, die bei schrägem Betrachtungswinkel blaugrün erscheint.

### Beispiel A3: Synthese eines cLCP

28218 Teile 2-Hydroxy-6-naphthoesäure, 34530 Teile 4-Hydroxy-benzoesäure, 8307 Teile Terephthalsäure, 3491 Teile 4,4'-Dihydroxibiphenyl und 4567 Teile 1,4:3,6-Dianhydro-D-sorbit (Isosorbid) werden in einem Reaktor mit 52326 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert.
Das Polymer schmilzt bei 180°C und hat unter senkrechtem Betrachtungswinkel eine blaustichig grüne Farbe. Dei Farbe tritt schon während der Kondensation im Vakuum auf und bleibt nach dem Abkühlen erhalten.

### Beispiel A4: Synthese eines cLCP:

28218 Teile 2-Hydroxy-6-naphthoesäure, 34530 Teile 4-Hydroxy-benzoesäure, 8307 Teile Terephthalsäure, 3724 Teile 4,4'-Dihydroxibiphenyl und 4384 Teile 1,4:3,6-Dianhydro-D-sorbit (Isosorbid) werden in einem Reaktor mit 52686 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert. Das Polymer schmilzt bei 168°C und hat unter senkrechtem Betrachtungswinkel eine rotstichig blaue Farbe. Dei Farbe tritt schon während der Kondensation im Vakuum auf und bleibt nach dem Abkühlen erhalten.

### Beispiel A5: Synthese eines cLCP:

22582 Teile 2-Hydroxy-6-naphthoesäure, 49723 Teile 4-Hydroxy-benzoesäure, 9968 Teile Terephthalsäure, 8714 Teile 1,4:3,6-Dianhydro-D-sorbit (Isosorbid) werden in einem Reaktor mit 63283 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird mit Stickstoff belüftet und das Polymer mit einem Extruder ausgetragen und pelletiert.
Das Polymer hat eine dunkel-violette, schmutzig wirkende Farbe. Dei Farbe tritt schon während der Kondensation im Vakuum auf.

### Beispiel A6: Synthese eines cLCP:

45163 Teile 2-Hydroxy-6-naphthoesäure, 38121 Teile 4-Hydroxy-benzoesäure, 6977 Teile Terephthalsäure und 6138 Teile 1,4:3,6-Dianhydro-D-sorbit (Isosorbid) werden in einem Reaktor mit 63283 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert.
Das Polymer hat eine beige, leicht schimmernde Farbe. Dei Farbe tritt schon während der Kondensation im Vakuum auf und bleibt nach dem Abkühlen erhalten.

### Beispiel A7: Synthese eines cLCP:

28218 Teile 2-Hydroxy-6-naphthoesäure, 34530 Teile 4-Hydroxy-benzoesäure, 8307 Teile Terephthalsäure, 2793 Teile 4,4'-Dihydroxibiphenyl und 5115 Teile 1,4:3,6-Dianhydro-D-sorbit (Isosorbid) werden in einem Reaktor mit 52326 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert.
Das Polymer schmilzt bei 148°C und hat unter senkrechtem Betrachtungswinkel eine rotgoldene Farbe. Dei Farbe tritt schon während der Kondensation im Vakuum auf und bleibt nach dem Abkühlen erhalten.

### Beispiel A8: Synthese eines cLCP:

28218 Teile 2-Hydroxy-6-naphthoesäure, 34530 Teile 4-Hydroxy-benzoesäure, 8307 Teile Terephthalsäure, 2327 Teile 4,4'-Dihydroxibiphenyl und 5480 Teile 1,4:3,6-Dianhydro-D-sorbit (Isosorbid) werden in einem Reaktor mit 52326 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Anschließend wird die Temperatur innerhalb von 165 Minuten auf 335°C erhöht und die Schmelze 30 Minuten bei dieser Temperatur weiter gerührt. Ab ca. 220°C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert.
Das Polymer schmilzt bei 158°C und hat unter senkrechtem Betrachtungswinkel eine grüngoldene Farbe. Dei Farbe tritt schon während der Kondensation im Vakuum auf und bleibt nach dem Abkühlen erhalten.

### Beispiel B1: Herstellung eines cLCP-Pulvers:

Das in Beispiel A4 hergestellte, pelletisierte Polymere wird auf einer Schneidmühle auf eine Kornfeinheit <2mm vorgemahlen. Die Endmahlung erfolgt auf einer Hochleistungsultrazentrifugalmühle mit einer 0,2 mm-Siebabtrennung. Dabei wird ein Pulver mit einer mittleren Korngröße D₅₀ von 69 *µ*m erhalten.

### Beispiel B2: Herstellung eines cLCP-Pulvers:

Das in Beispiel A3 hergestellte Polymere wird auf einer Schneidmühle auf eine Kornfeinheit <2mm gemahlen. Die Endmahlung erfolgt auf einer Luftstrahlmühle mit Dosieranlage. Dabei wird ein Pulver mit einer mittleren Korngröße D₅₀ von 31 *µ*m erhalten.

### Beispiel B3: Herstellung eines cLCP-Pulvers:

Das in Beispiel A4 hergestellte pelletisierte Polymere wird auf einer Schneidmühle auf eine Kornfeinheit <2mm vorgemahlen. Die Endmahlung erfolgt mit erhöhtem Durchsatz auf einer Hochleistungsultrazentrifugalmühle mit einer 0,2 mm-Siebabtrennung. Dabei wird ein Pulver mit einer mittleren Korngröße D₅₀ von 117 *µ*m erhalten.

### Beispiel B4: Herstellung eines cLCP-Pulvers mit enger Korngrößenfraktion:

Aus dem in Beispiel B3 hergestellten Pulver werden mit Hilfe eines Schwingsiebs alle Teilchen größer als 150 *µ*m und kleiner als 90 *µ*m abgetrennt, so daß ein Pulver mit einer Korngrößenfraktion zwischen 90 und 150 *µ*m erhalten wird.

### Beispiel B5: Herstellung eines LCP-Blends:

2000 Teile des in Beispiel A5 hergestellten cLCPs werden auf einer Schneidmühle auf eine Kornfeinheit <2 mm gemahlen und mit 1000 Teilen des in Beispiel A6 hergestellten cLCPs, welches auf die gleiche Weise gemahlen wurde, gemischt. Anschließend wird die Mischung auf einem Einschneckenextruder bei Temperaturen zwischen 250°C und 320°C als Strang extrudiert, mit Luft abgekühlt und granuliert. Es wird ein Blend erhalten, welcher unter senkrechtem Betrachtungswinkel eine brillante, blaue Farbe zeigt.

### Beispiel B6: Herstellung eines cLCP-Blends:

Es wird Beispiel B5 mit einer Mischung aus 15 Teilen des in Beispiel A5 hergestellten cLCPs und 15 Teilen des in Beispiel A6 hergestellten cLCPs wiederholt. Es wird ein Blend erhalten, welcher unter senkrechtem Betrachtungswinkel eine brillante, grünblaue Farbe zeigt.

### Beispiel B7: Herstellung eines cLCP-Pulvers:

Das in Beispiel B5 hergestellte Stranggranulat wird mit einer Universalmühle mit Messereinsatz auf eine Korngröße <2 mm gemahlen. Die Endmahlung erfolgt bei mittlerem Durchsatz auf einer Hochleistungsultrazentrifugalmühle mit einer 0,2 mm-Siebabtrennung. Dabei wird ein Pulver mit einer Korngröße <200 *µ* m erhalten.

### Beispiel B8: Herstellung eines cLCP-Pulvers:

Das in Beispiel B6 hergestellte Stranggranulat wird mit einer Universalmühle mit Messereinsatz auf eine Korngröße < 2 mm gemahlen. Die Endmahlung erfolgt bei mittlerem Durchsatz auf einer Hochleistungsultrazentrifugalmühle mit einer 0,2 mm-Siebabtrennung. Dabei wird ein Pulver mit einer Korngröße < 200 *µ*m erhalten.

### Beispiel B9: Herstellung eines cLCP-Pulvers:

Das in Beispiel A1 hergestellte Polymere wird auf zentimetergroße Stücke vorzerkleinert und mit einer Universalmühle mit Messereinsatz auf eine Korngröße < 1 mm gemahlen. Die Endmahlung erfolgt bei mittlerem Durchsatz auf einer Hochleistungsultrazentrifugalmühle mit einer 0,2 mm-Siebabtrennung.
Dabei wird ein Pulver mit einer Korngröße < 200 *µ*m erhalten.

### Beispiel B10: Herstellung eines cLCP-Pulvers:

Das in Beispiel A2 hergestellte Polymere wird auf zentimetergroße Stücke vorzerkleinert und mit einer Universalmühle mit Messereinsatz auf eine Korngröße <2 mm gemahlen. Die Endmahlung erfolgt bei mittlerem Druchsatz auf einer Hochleistungsultrazentrifugalmühle mit einer 0,2 mm-Siebabtrennung. Dabei wird ein Pulver mit einer Korngröße <200 *µ*m erhalten.

### Beispiel B11: Herstellung eines cLCP-Pulvers:

Das in Beispiel A3 hergestellte Polymere wird auf einer Schneidmühle auf eine Kornfeinheit <2 mm gemahlen. Die Endmahlung erfolgt auf einer Luftstrahlmühle mit Dosieranlage und hohem Durchsatz. Dabei wird ein Pulver mit einer mittleren Korngröße D₅₀ von 322 *µ*m erhalten.

### Beispiel B12: Herstellung eines cLCP-Pulvers mit enger Korngrößenfraktion:

Aus dem in Beispiel B11 hergestellten Pulver werden mit Hilfe eines Schwingsiebs alle Teilchen größer als 150 *µ*m und kleiner als 90 *µ*m abgetrennt, so daß ein Pulver mit einer Korngrößenfraktion zwischen 90 und 150 *µ*m erhalten wird.

### Beispiel B13: Herstellung eines cLCP-Masterbatch:

1470 Teile des in Beispiel A7 hergestellten cLCPs werden auf einer Schneidmühle auf eine Kornfeinheit < 1 mm gemahlen und mit 30 Teilen C.I. Pigment Red 149 gemischt. Anschließend wird die Mischung auf einem Einschneckenextruder bei Temperaturen zwischen 240°C und 290°C als Band extrudiert, mit Luft abgekühlt und granuliert. Es wird ein Granulat erhalten, welches unter senkrechtem Betrachtungswinkel eine kräftig-rotgoldene Farbe zeigt.

### Beispiel B14: Herstellung eines cLCP-Masterbatch:

1470 Teile des in Beispiel A8 hergestellten cLCPs werden auf einer Schneidmühle auf eine Kornfeinheit < 1 mm gemahlen und mit 30 Teilen C.I.

Pigment Black 7 gemischt. Anschließend wird die Mischung auf einem Einschneckenextruder bei Temperaturen zwischen 240°C und 290°C als Band extrudiert, mit Luft abgekühlt und granuliert. Es wird ein Granulat erhalten, welches unter senkrechtem Betrachtungswinkel eine kräftige, grüngoldene Farbe zeigt.

### Beispiel B15: Herstellung eines cLCP-Pulvers:

Das in Beispiel B13 hergestellte Granulat wird auf einer Schneidmühle vorzerkleinert und mit einer Universalmühle mit Messereinsatz auf eine Korngröße < 1 mm gemahlen. Die Endmahlung erfolgt bei mittlerem Durchsatz auf einer Hochleistungsultrazentrifugalmühle mit einer 0,2 mm-Siebabtrennung.
Dabei wird ein Pulver mit einer Korngröße < 200 *µ*m erhalten.

### Beispiel B16: Herstellung eines cLCP-Pulvers:

Das in Beispiel B14 hergestellte Granulat wird auf einer Schneidmühle vorzerkleinert und mit einer Universalmühle mit Messereinsatz auf eine Korngröße < 1 mm gemahlen. Die Endmahlung erfolgt bei mittlerem Durchsatz auf einer Hochleistungsultrazentrifugalmühle mit einer 0,2 mm-Siebabtrennung. Dabei wird ein Pulver mit einer Korngröße < 200 *µ*m erhalten.

### Beispiel C1:

Herstellung einer Pulvereffektbeschichtung mit einer triboelektrischen Spritzpistole:

Das in Beispiel B2 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film erhalten, welcher unter senkrechtem Betrachtungswinkel eine brillante, grünblaue Farbe und unter schrägem Betrachtungswinkel eine brillante, rötlich blaue Farbe zeigt.

### Beispiel C2:

### Herstellung einer Pulvereffektbeschichtung mit einer Corona-Spritzpistole:

Das in Beispiel B1 hergestellte Pulver wird in den Pulverbehälter einer Corona-Sprühpistole der Firma Intec, Dortmund, eingefüllt. An die Elektroden der Sprühpistole wird eine Spannung von 35 kV angelegt. Mit diesem Sprühgerät wird in einer Sprühkabine der Fa. Werner & Pfleiderer, Stuttgart, bei mittlerem Pulverdurchsatz ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film erhalten, welcher unter senkrechtem Betrachtungswinkel eine brillante, grünblaue Farbe und unter schrägem Betrachtungswinkel eine brillante, rötlich blaue Farbe zeigt.

### Beispiel C3:

### Herstellung einer Pulvereffektbeschichtung mit einer Flammspritzpistole:

Ein Teil des in Beispiel B12 hergestellten Pulvers wird in den Pulverbehälter der Flammspritzpistole ® Unisprayjet SIJ, ausgestattet mit der Düse LTA, der Firma UTP, Bad Krotzingen, eingefüllt. Die Pistole wird mit einem Acetylendruck von 0,6 bar und einem Sauerstoffdruck von 2,5 bar betrieben. Das Pulver wird auf ein 3 mm starkes, sandgestrahltes Stahlblech aufgespritzt, welches auf 280 bis 300°C vorgeheizt wurde. 60 Sekunden nach beendetem Auftrag wird das Blech in ein Wasserbad eingetaucht. Es wird eine homogene ca. 250 *µ*m dicke, blaugrüne Beschichtung erhalten, welche unter schrägem Betrachtungswinkel eine rotblaue Farbe zeigt. Läßt man das Blech an der Luft abkühlen, so wird ein Film erhalten, der unter senkrechtem Betrachtungswinkel eine grüngoldene Farbe und unter schrägem Betrachtungswinkel eine blaugrüne Farbe zeigt.

### Beispiel C4:

### Hestellung einer Pulvereffektbeschichtung nach dem Wirbelsinterverfahren:

Ein Teil des in Beispiel B4 hergestellten Pulvers wird in eine Wirbelbettkammer eingefüllt und mit trockener Luft fluidisiert. In diese Wirbelschicht wird 2 Sekunden lang ein 3 mm dickes Stahlblech eingetaucht, welches vorher auf 320°C erhitzt wurde. Auf der Oberfläche des Blechs wird sofort eine Pulverschicht abgeschieden, die zu schmelzen beginnt und einen blaugrünen Film ausbildet. Nach dem Abschrecken in Wasser wird ein unter senkrechtem Betrachtungswinkel blaugrüner Film erhalten, welcher unter schrägem Betrachtungswinkel einen rotblauen Farbton zeigt.

### Beispiel C5:

### Herstellung einer Pulvereffektbeschichtung mit einer triboelektrischen Spritzpistole:

Das in Beispiel B9 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film mit einer Schichtdicke von ca 25 *µ*m erhalten, welcher unter senkrechtem Betrachtungswinkel eine brillante, rötlich goldene Farbe und unter schrägem Betrachtungswinkel eine brillante, gelbgrüne Farbe zeigt.

### Beispiel C6:

### Herstellung einer Pulvereffektbeschichtung mit einer triboelektrischen Spritzpistole:

Das in Beispiel B10 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Aikyd/Melaminharz-Einbrennlack grundiertes Aluminiumblech durch kreuzweisen Auftrag beschichtet. Zur Filmbildung wird das beschichtete Blech 5 Minuten auf 200°C erhitzt und das Blech anschließend in Wasser getaucht. Es wird ein homogener Film mit einer Schichtdicke von ca 25 *µ*m erhalten, welcher unter senkrechtem Betrachtungswinkel eine brillante, rötlich goldene Farbe und unter schrägem Betrachtungswinkel eine brillante, blaustichig grüne Farbe zeigt.

### Beispiel C7:

### Herstellung einer Pulvereffektbeschichtung mit einer triboelektrischen Spritzpistole:

Das in Beispiel B10 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem roten Alkyd/Melaminharz-Einbrennlack grundiertes Aluminiumblech durch kreuzweisen Auftrag beschichtet. Zur Filmbildung wird das beschichtete Blech 5 Minuten auf 200°C erhitzt und das Blech anschließend in Wasser getaucht. Es wird ein homogener Film mit einer Schichtdicke von ca 20 *µ*m erhalten, welcher unter senkrechtem Betrachtungswinkel eine brillante, rötlich goldene Farbe und unter schrägem Betrachtungswinkel eine brillante, grünlich goldene Farbe zeigt.

### Beispiel C8:

### Herstellung einer Pulvereffektbeschichtung mit einer triboelektrischen Spritzpistole:

Das in Beispiel B10 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem blauen Pulverlack grundiertes Aluminiumblech durch kreuzweisen Auftrag beschichtet. Zur Filmbildung wird das beschichtete Blech 5 Minuten auf 200°C erhitzt und das Blech anschließend in Wasser getaucht. Es wird ein homogener Film mit einer Schichtdicke von ca 25 *µ*m erhalten, welcher unter senkrechtem Betrachtungswinkel eine brillante, goldene Farbe und unter schrägem Betrachtungswinkel eine brillante, grünlich goldene Farbe zeigt.

### Beispiel C9:

### Herstellung einer Pulvereffektbeschichtung mit einer triboelektrischen Spritzpistole:

Das in Beispiel B7 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film mit einer Schichtdicke von ca 25 *µ*m erhalten, welcher unter senkrechtem Betrachtungswinkel eine brillante, blaue Farbe und unter schrägem Betrachtungswinkel eine brillante, rötlich blaue Farbe zeigt.

### Beispiel C10:

### Herstellung einer Pulvereffektbeschichtung mit einer triboelektrischen Spritzpistole:

Das in Beispiel B8 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film mit einer Schichtdicke von ca 25 *µ*m erhalten, welcher unter senkrechtem Betrachtungswinkel eine brillante, grünblaue Farbe und unter schrägem Betrachtungswinkel eine brillante, rötlich blaue Farbe zeigt. Wird die Effektbeschichtung mit einem handelsüblichen 2K-Polyurethan-Klarlack oder mit einem wasserverdünnbaren Klarlack überzogen, so wird die Brillanz der Beschichtung, die Selektivreflexion und die Farbintensität verstärkt.

### Beispiel C11:

### Herstellung einer Pulvereffektbeschichtung mit einer triboelektrischen Spritzpistole:

Das in Beispiel B2 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar eine dunkelrote ® Ceran-Glasplatte der Fa. Schott, Mainz, durch kreuzweisen Auftrag beschichtet. Zur Filmbildung wird die Glasplatte 5 Minuten auf 275°C erhitzt und die Glasplatte anschließend in Wasser getaucht. Es wird ein Film erhalten, welcher unter senkrechtem Betrachtungswinkel eine brillante, grüne Farbe und unter schrägem Betrachtungswinkel eine brillante, blaue Farbe zeigt.

### Beispiel C12:

### Herstellung einer Pulvereffektbeschichtung mit einer triboelektrischen Spritzpistole:

Das in Beispiel B15 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film mit einer Schichtdicke von ca 30 *µ*m erhalten, welcher unter senkrechtem Betrachtungswinkel eine brillante, rotgoldene Farbe und unter schrägem Betrachtungswinkel eine brillante, grünlich goldene Farbe mit rötlichem Schimmer zeigt.

### Beispiel C13:

### Herstellung einer Pulvereffektbeschichtung mit einer triboelektrischen Spritzpistole:

Das in Beispiel B16 hergestellte Pulver wird in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 275°C erhitzt und das Blech anschließend in Wasser getaucht. Es wird ein homogener Film mit einer Schichtdicke von ca 20 *µ*m erhalten, welcher unter senkrechtem Betrachtungswinkel eine grünlich goldene Farbe und unter schrägem Betrachtungswinkel eine brillante, blaugoldene Farbe zeigt.

### Beispiel C14:

### Herstellung einer Pulvereffektbeschichtung nach dem Wirbelsinterverfahren:

Ein Teil des in Beispiel B10 hergestellten Pulvers wird in eine Wirbelbettkammer eingefüllt und mit trockener Luft fluidisiert. in diese Wirbelschicht wird 2 Sekunden lang ein Holzbrett eingetaucht, welches vorher auf 220°C erhitzt wurde. Auf der Oberfläche des Bretts wird langsam eine Schicht abgeschieden, die zu schmelzen beginnt und einen goldenen Film ausbildet. Nach einem 5 minütigem Erhitzen auf 220°C wird ein unter senkrechtem Betrachtungswinkel rotgoldener Film erhalten, welcher unter schrägem Betrachtungswinkel einen grüngoldenen Farbton zeigt.

### Beispiel C15:

### Herstellung einer Pulvereffektbeschichtung mit einer triboelektrischen Spritzpistole:

1000 Teile des in Beispiel B1 hergestellten Pulvers werden intensiv mit 1000 Teilen des in Beispiel B2 hergestellten Pulvers gemischt und in den Pulverbehälter des Sprühgeräts "® Tribostar" der Firma Intec, Dortmund, eingefüllt. Das Sprühgerät ist mit einem Normsprührohr und einer Sterninnenstange ausgerüstet. Mit diesem Sprühgerät wird in einer Sprühkabine der Firma Intec, Dortmund, bei hohem Pulverdurchsatz und einem Sprühdruck von 3 bar ein mit einem schwarzen Pulverlack grundiertes Aluminiumblech durch kreuzweisen Auftrag beschichtet. Zur Filmbildung wird das beschichtete Blech 5 Minuten auf 270°C erhitzt und das Blech anschließend in Wasser getaucht. Es wird ein homogener Film mit einer Schichtdicke von ca 20 *µ*m erhalten, welcher unter senkrechtem Betrachtungswinkel eine grünstichig blaue Farbe und unter schrägem Betrachtungswinkel eine brillante, rötlich blaue Farbe zeigt.

## Patentansprüche (Patentansprüche für folgende(n) Vertragsstaat(en): FR, GB)

1. Pulvereffektbeschichtung mit einem vom Betrachtungswinkel abhängigen Farbeindruck, bestehend im wesentlichen aus einem oder mehreren nicht aushärtbaren cholesterischen flüssigkristallinen Polymeren, oder im wesentlichen aus mindestens einem nicht aushärtbaren nematischen flüssigkristallinen Polymeren und mindestens einem nicht aushärtbaren cholesterischen flüssigkristallinen Polymeren, **dadurch gekennzeichnet, daß** das nicht aushärtbare cholesterische flüssigkristalline Polymer ein cholesterisches flüssigkristallines Hauptkettenpolymer ist, welches im wesentlichen aus
a) 0 bis 99 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,5 Mol% mindestens einer Verbindung aus der Gruppe der aromatischen Dicarbonsäuren und cycloaliphatischen Dicarbonsäuren;
c) 0 bis 49,5 Mol% mindestens einer Verbindung aus der Gruppe der aromatischen Diole, cycloaliphatischen Diole und aromatischen Diamine;
d) 1 bis 40 Mol% an chiralen, bifunktionellen Comonomeren; und
e) 0 bis 5 Mol% einer verzweigbaren Komponente mit mehr als 2 funktionellen Gruppen, wobei die Summe 100 Mol% ergibt, besteht,
oder eine Kombination davon ist.

2. Pulvereffektbeschichtung nach Anspruch 1, **dadurch gekennzeichnet, daß** das chirale, bifunktionelle Comonomer eine oder mehrere Verbindungen der Formeln 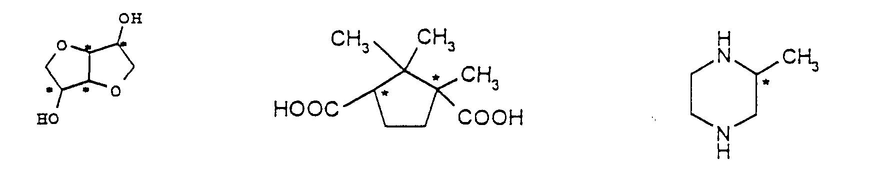 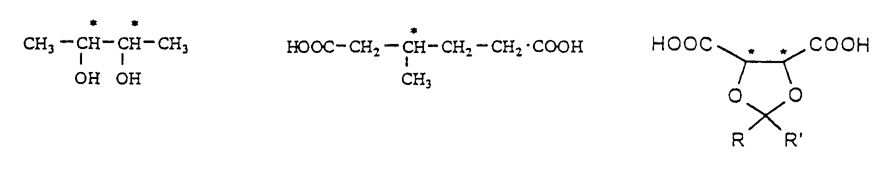 und 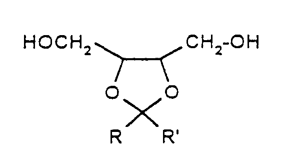 ist, wobei R und R' jeweils unabhängig voneinander H, C₁-C₆-Alkyl oder Phenyl sind.

3. Pulvereffektbeschichtung nach Anspruch 1 oder 2, **dadurch gekennzeichnet, daß** weitere nicht flüssigkristalline Zusatzstoffe aus der Gruppe der Absorptions- und/oder Interferenzpigmente, Ladungssteuermittel, Füllstoffe, Haftvermittler, Lichtschutzmittel, Stabilisatoren sowie der Stoffe, die die Rheologie und den Verlauf beeinflussen, enthalten sind.

4. Verfahren zur Herstellung einer Pulvereffektbeschichtung nach mindestens einem der Ansprüche 1 bis 3, **dadurch gekennzeichnet, daß** die nicht aushärtbaren, cholesterischen flüssigkristallinen Polymere und gegebenenfalls die nicht aushärtbaren nematischen flüssigkristallinen Polymere direkt bei deren Synthese oder in einem nachfolgenden Prozess in ein feinteiliges Pulver überführt werden, welches mit Hilfe eines Pulverlackierverfahrens auf das zu beschichtende Objekt aufgebracht und durch Temperaturbehandlung in einen Film mit einem vom Betrachtungswinkel abhängigen Farbeindruck überführt wird.

5. Verfahren nach Anspruch 4, **dadurch gekennzeichnet, daß** die nicht aushärtbaren cholesterischen flüssigkristallinen Polymere und gegebenenfalls die nicht aushärtbaren nematischen flüssigkristallinen Polymere durch Polymerisation in einer emulgierten oder dispergierten Phase in Pulverform hergestellt werden.

6. Verfahren nach Anspruch 4, **dadurch gekennzeichnet, daß** die nicht aushärtbaren cholesterischen und gegebenenfalls nematischen flüssigkristallinen Polymere nach deren Synthese durch einen Mahlprozess in ein feinteiliges Pulver überführt werden.

7. Verfahren nach einem oder mehreren der Ansprüche 4 bis 6, **dadurch gekennzeichnet, daß** das feinteilige Pulver mit Hilfe des Corona-Verfahrens, eines triboelektrischen oder elektrokinetischen Verfahrens, eines Flammspritzverfahrens oder eines Wirbelsinterverfahrens auf das zu beschichtende Objekt aufgebracht wird.

8. Verfahren nach einem oder mehreren der Ansprüche 4 bis 7, **dadurch gekennzeichnet, daß** die Pulvereffektbeschichtung auf einen dunklen, vorzugsweise schwarzen, Untergrund oder Grundierung aufgebracht wird.

9. Verfahren nach einem oder mehreren der Ansprüche 4 bis 8, **dadurch gekennzeichnet, daß** die Pulvereffektbeschichtung mit einem oder mehreren Klarlackschichten überzogen wird.

10. Verwendung einer Pulvereffektbeschichtung nach einem oder mehreren der Ansprüche 1 bis 3 zum Beschichten von natürlichen oder synthetischen Materialien.

11. Verwendung nach Anspruch 10, **dadurch gekennzeichnet, daß** die zu beschichtenden Materialien Gegenstände aus Metall oder Kunststoff sind.

12. Verwendung nach Anspruch 10, **dadurch gekennzeichnet, daß** die zu beschichtenden Gegenstände Karosserien oder Karosserieteile von Kraftfahrzeugen sind.

## Patentansprüche (Patentansprüche für folgende(n) Vertragsstaat(en): DE)

1. Pulvereffektbeschichtung mit einem vom Betrachtungswinkel abhängigen Farbeindruck, bestehend im wesentlichen aus einem oder mehreren nicht aushärtbaren cholesterischen flüssigkristallinen Polymeren, oder im wesentlichen aus mindestens einem nicht aushärtbaren nematischen flüssigkristallinen Polymeren und mindestens einem nicht aushärtbaren cholesterischen flüssigkristallinen Polymeren, **dadurch gekennzeichnet, daß** das nicht aushärtbare cholesterische flüssigkristalline Polymer ein cholesterisches flüssigkristallines Seitengruppenpolymer, welches in der Hauptkette Polysiloxane, cyclische Siloxane, Polyacrylate und/oder Polymethacrylate in nicht aushärtbarer Form und in den Seitenketten mesogene Gruppen enthält, ist, oder ein cholesterisches flüssigkristallines Hauptkettenpolymer ist, welches im wesentlichen aus
a) 0 bis 99 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,5 Mol% mindestens einer Verbindung aus der Gruppe der aromatischen Dicarbonsäuren und cycloaliphatischen Dicarbonsäuren;
c) 0 bis 49,5 Mol% mindestens einer Verbindung aus der Gruppe der aromatischen Diole, cycloaliphatischen Diole und aromatischen Diamine;
d) 1 bis 40 Mol% an chiralen, bifunktionellen Comonomeren; und
e) 0 bis 5 Mol% einer verzweigbaren Komponente mit mehr als 2 funktionellen Gruppen, wobei die Summe 100 Mol% ergibt, besteht, oder eine Kombination davon ist.

2. Pulvereffektbeschichtung nach Anspruch 1, **dadurch gekennzeichnet, daß** das chirale, bifunktionelle Comonomer eine oder mehrere Verbindungen der Formeln 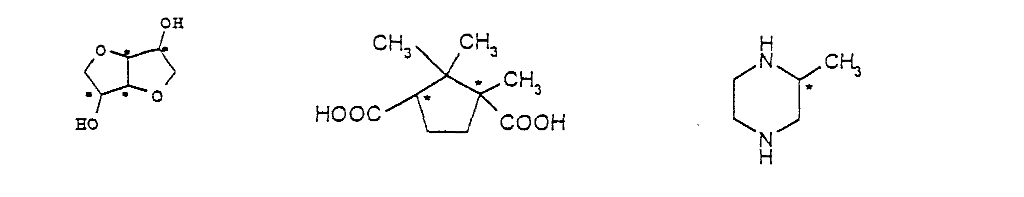 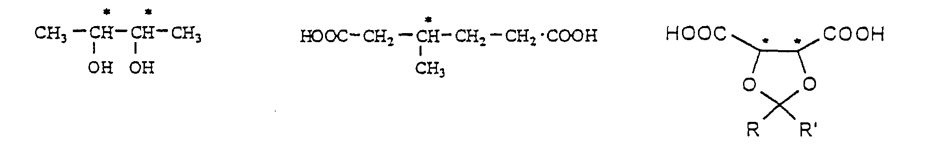 und 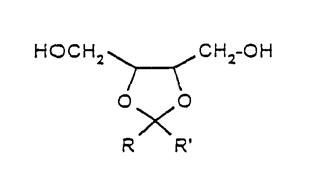 ist, wobei R und R' jeweils unabhängig voneinander H, C₁-C₆-Alkyl oder Phenyl sind.

3. Pulvereffektbeschichtung nach Anspruch 1 oder 2, **dadurch gekennzeichnet, daß** weitere nicht flüssigkristalline Zusatzstoffe aus der Gruppe der Absorptions- und/oder Interferenzpigmente, Ladungssteuermittel, Füllstoffe, Haftvermittler, Lichtschutzmittel, Stabilisatoren sowie der Stoffe, die die Rheologie und den Verlauf beeinflussen, enthalten sind.

4. Verfahren zur Herstellung einer Pulvereffektbeschichtung nach mindestens einem der Ansprüche 1 bis 3, **dadurch gekennzeichnet, daß** die nicht aushärtbaren, cholesterischen flüssigkristallinen Polymere und gegebenenfalls die nicht aushärtbaren nematischen flüssigkristallinen Polymere direkt bei deren Synthese oder in einem nachfolgenden Prozess in ein feinteiliges Pulver überführt werden, welches mit Hilfe eines Pulverlackierverfahrens auf das zu beschichtende Objekt aufgebracht und durch Temperaturbehandlung in einen Film mit einem vom Betrachtungswinkel abhängigen Farbeindruck überführt wird.

5. Verfahren nach Anspruch 4, **dadurch gekennzeichnet, daß** die nicht aushärtbaren cholesterischen flüssigkristallinen Polymere und gegebenenfalls die nicht aushärtbaren nematischen flüssigkristallinen Polymere durch Polymerisation in einer emulgierten oder dispergierten Phase in Pulverform hergestellt werden.

6. Verfahren nach Anspruch 4, **dadurch gekennzeichnet, daß** die nicht aushärtbaren cholesterischen und gegebenenfalls nematischen flüssigkristallinen Polymere nach deren Synthese durch einen Mahlprozess in ein feinteiliges Pulver überführt werden.

7. Verfahren nach einem oder mehreren der Ansprüche 4 bis 6, **dadurch gekennzeichnet, daß** das feinteilige Pulver mit Hilfe des Corona-Verfahrens, eines triboelektrischen oder elektrokinetischen Verfahrens, eines Flammspritzverfahrens oder eines Wirbelsinterverfahrens auf das zu beschichtende Objekt aufgebracht wird.

8. Verfahren nach einem oder mehreren der Ansprüche 4 bis 7, **dadurch gekennzeichnet, daß** die Pulvereffektbeschichtung auf einen dunklen, vorzugsweise schwarzen, Untergrund oder Grundierung aufgebracht wird.

9. Verfahren nach einem oder mehreren der Ansprüche 4 bis 8, **dadurch gekennzeichnet, daß** die Pulvereffektbeschichtung mit einem oder mehreren Klarlackschichten überzogen wird.

10. Verwendung einer Pulvereffektbeschichtung nach einem oder mehreren der Ansprüche 1 bis 3 zum Beschichten von natürlichen oder synthetischen Materialien.

11. Verwendung nach Anspruch 10, **dadurch gekennzeichnet, daß** die zu beschichtenden Materialien Gegenstände aus Metall oder Kunststoff sind.

12. Verwendung nach Anspruch 10, **dadurch gekennzeichnet, daß** die zu beschichtenden Gegenstände Karosserien oder Karosserieteile von Kraftfahrzeugen sind.

## Claims (Claims for the following Contracting State(s): FR, GB)

1. An effect powder coating having a perceived color which is dependent on the viewing angle, consisting essentially of one or more noncurable cholesteric liquid-crystalline polymers, or essentially of at least one noncurable nematic liquid-crystalline polymer and at least one noncurable cholesteric liquid-crystalline polymer, wherein the noncurable cholesteric liquid-crystalline polymer is a cholesteric liquid-crystalline main-chain polymer, which consists essentially of
a) from 0 to 99 mol% of at least one compound from the group consisting of aromatic hydroxycarboxylic acids, cycloaliphatic hydroxycarboxylic acids and aromatic aminocarboxylic acids;
b) from 0 to 49.5 mol% of at least one compound from the group consisting of aromatic dicarboxylic acids and cycloaliphatic dicarboxylic acids;
c) from 0 to 49.5 mol% of at least one compound from the group consisting of aromatic diols, cycloaliphatic diols and aromatic diamines;
d) from 1 to 40 mol% of chiral, bifunctional comonomers; and
e) from 0 to 5 mol% of a branchable component having more than 2 functional groups,
the sum adding up to 100 mol%,
or a combination thereof.

2. An effect powder coating as claimed in claim 1, wherein the chiral bifunctional comonomer comprises one or more compounds of the formulae 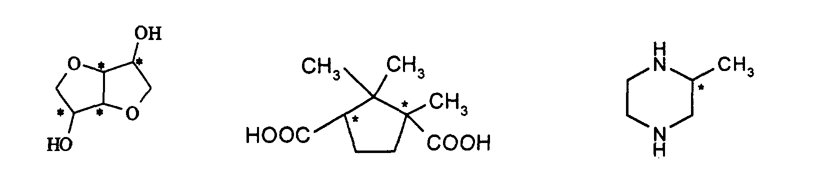 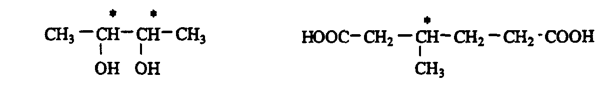 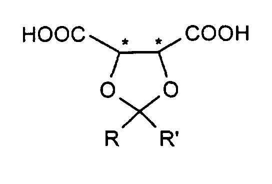 and 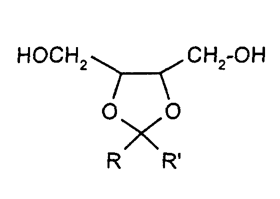 in which R and R', each independently of one another are H, C₁-C₆-alkyl or phenyl.

3. An effect powder coating as claimed in claim 1 or 2, wherein further additives which are not liquid-crystalline are present, from the group consisting of absorption and/or interference pigments, charge control agents, fillers, adhesion promoters, light stabilizers, other stabilizers, and substances which influence rheology and leveling.

4. A process for preparing an effect powder coating as claimed in at least one of claims 1 to 3, which comprises converting the noncurable, cholesteric liquid-crystalline polymers and, if desired, the noncurable nematic liquid-crystalline polymers into a finely divided powder, directly in the course of their synthesis or in a subsequent process, applying this powder to the object that is to be coated, using a powder coating technique, and converting the applied powder by temperature treatment into a film whose perceived color is dependent on the viewing angle.

5. The process as claimed in claim 4, wherein the noncurable cholesteric liquid-crystalline polymers and, if desired, the noncurable nematic liquid-crystalline polymers are prepared in powder form by polymerization in an emulsified or dispersed phase.

6. The process as claimed in claim 4, wherein the noncurable cholesteric and, if used, nematic liquid-crystalline polymers are converted into a finely divided powder after their synthesis by means of a milling process.

7. The process as claimed in one or more of claims 4 to 6, wherein the finely divided powder is applied by means of the corona process, a triboelectric or electrokinetic process, a flame spraying process or a fluidized-bed sintering process to the object that is to be coated.

8. The process as claimed in one or more of claims 4 to 7, wherein the effect powder coating is applied to a dark, preferably black, substrate or primer.

9. The process as claimed in one or more of claims 4 to 8, wherein the effect powder coating is coated with one or more clearcoats.

10. The use of an effect powder coating as claimed in one or more of claims 1 to 3 for coating natural or synthetic materials.

11. The use as claimed in claim 10, wherein the materials to be coated are articles of metal or plastic.

12. The use as claimed in claim 10, wherein the articles to be coated are the bodywork, or bodywork parts, of motor vehicles.

## Claims (Claims for the following Contracting State(s): DE)

1. An effect powder coating having a perceived color which is dependent on the viewing angle, consisting essentially of one or more noncurable cholesteric liquid-crystalline polymers, or essentially of at least one noncurable nematic liquid-crystalline polymer and at least one noncurable cholesteric liquid-crystalline polymer, wherein the noncurable cholesteric liquid-crystalline polymer is a cholesteric liquid-crystalline side-group polymer, which comprises polysiloxanes, cyclic siloxanes, polyacrylates and/or polymethacrylates in noncurable form in the main chain and mesogenic groups in the side chains, or a cholesteric liquid-crystalline main-chain polymer, which consists essentially of
a) from 0 to 99 mol% of at least one compound from the group consisting of aromatic hydroxycarboxylic acids, cycloaliphatic hydroxycarboxylic acids and aromatic aminocarboxylic acids;
b) from 0 to 49.5 mol% of at least one compound from the group consisting of aromatic dicarboxylic acids and cycloaliphatic dicarboxylic acids;
c) from 0 to 49.5 mol% of at least one compound from the group consisting of aromatic diols, cycloaliphatic diols and aromatic diamines;
d) from 1 to 40 mol% of chiral, bifunctional comonomers; and
e) from 0 to 5 mol% of a branchable component having more than 2 functional groups,
the sum adding up to 100 mol%,
or a combination thereof.

2. An effect powder coating as claimed in claim 1, wherein the chiral bifunctional comonomer comprises one or more compounds of the formulae 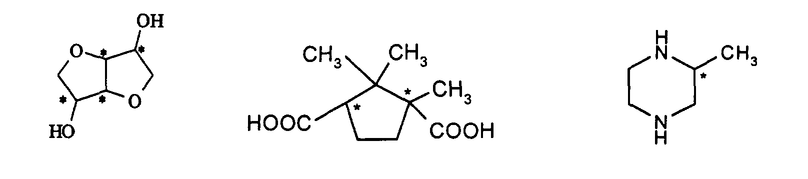 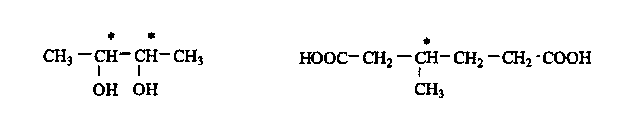 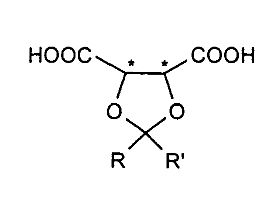 and 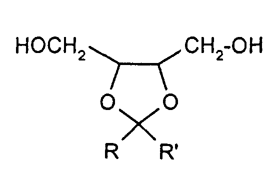 in which R and R', each independently of one another are H, C₁-C₆-alkyl or phenyl.

3. An effect powder coating as claimed in claim 1 or 2, wherein further additives which are not liquid-crystalline are present, from the group consisting of absorption and/or interference pigments, charge control agents, fillers, adhesion promoters, light stabilizers, other stabilizers, and substances which influence rheology and leveling.

4. A process for preparing an effect powder coating as claimed in at least one of claims 1 to 3, which comprises converting the noncurable, cholesteric liquid-crystalline polymers and, if desired, the noncurable nematic liquid-crystalline polymers into a finely divided powder, directly in the course of their synthesis or in a subsequent process, applying this powder to the object that is to be coated, using a powder coating technique, and converting the applied powder by temperature treatment into a film whose perceived color is dependent on the viewing angle.

5. The process as claimed in claim 4, wherein the noncurable cholesteric liquid-crystalline polymers and, if desired, the noncurable nematic liquid-crystalline polymers are prepared in powder form by polymerization in an emulsified or dispersed phase.

6. The process as claimed in claim 4, wherein the noncurable cholesteric and, if used, nematic liquid-crystalline polymers are converted into a finely divided powder after their synthesis by means of a milling process.

7. The process as claimed in one or more of claims 4 to 6, wherein the finely divided powder is applied by means of the corona process, a triboelectric or electrokinetic process, a flame spraying process or a fluidized-bed sintering process to the object that is to be coated.

8. The process as claimed in one or more of claims 4 to 7, wherein the effect powder coating is applied to a dark, preferably black, substrate or primer.

9. The process as claimed in one or more of claims 4 to 8, wherein the effect powder coating is coated with one or more clearcoats.

10. The use of an effect powder coating as claimed in one or more of claims 1 to 3 for coating natural or synthetic materials.

11. The use as claimed in claim 10, wherein the materials to be coated are articles of metal or plastic.

12. The use as claimed in claim 10, wherein the articles to be coated are the bodywork, or bodywork parts, of motor vehicles.

## Revendications (Revendications pour l'(les) Etat(s) contractant(s) suivant(s): FR, GB)

1. Revêtement en poudre à effet présentant une perception de couleur dépendant de l'angle d'observation, constitué essentiellement d'un ou plusieurs polymères à cristaux liquides cholestériques non durcissables, ou essentiellement d'au moins un polymère à cristaux liquides nématiques non durcissable et d'au moins un polymère à cristaux liquides cholestériques non durcissable, **caractérisé en ce que** le polymère à cristaux liquides cholestériques non durcissable est un polymère à cristaux liquides cholestériques à chaîne principale, lequel est constitué essentiellement
a) de 0 à 99 % molaires d'au moins un composé pris dans le groupe des acides hydroxycarboxyliques aromatiques, des acides hydroxycarboxyliques cycloaliphatiques et des acides aminocarboxyliques aromatiques ;
b) de 0 à 49,5 % d'au moins un composé pris dans le groupe des acides dicarboxyliques aromatiques et des acides dicarboxyliques cycloaliphatiques ;
c) de 0 à 49,5 % d'au moins un composé pris dans le groupes des diols aromatiques, diols cycloaliphatiques et diamines aromatiques ;
d) de 1 à 40 % molaires de comonomères bifonctionnels chiraux ; et
e) de 0 à 5 % molaires d'un constituant ramifiable possédant plus de deux groupes fonctionnels, la somme donnant 100 % molaires, ou d'une combinaison de ces constituants.

2. Revêtement en poudre à effet selon la revendication 1, **caractérisé en ce que** le comonomère bifonctionnel chiral représente un ou plusieurs composés de formules 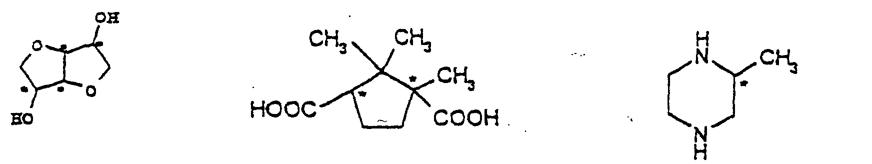 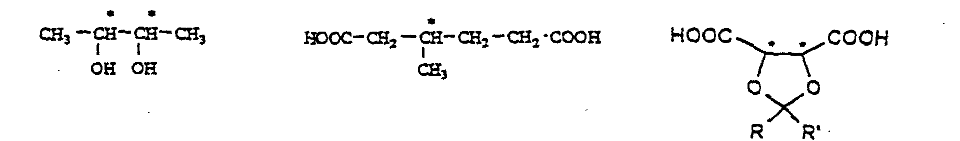 et 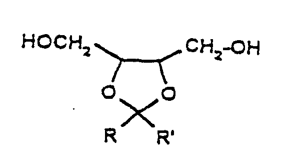 R et R' représentant chacun, indépendamment l'un de l'autre, un atome d'hydrogène, des groupes alkyle en C₁-C₆ ou phényle.

3. Revêtement en poudre à effet selon la revendication 1 ou 2, caractérisé en qu'il contient d'autres matières d'addition, qui ne sont pas des cristaux liquides, prises dans le groupe des pigments d'absorption et/ou d'interférence, des agents de contrôle de charge, des charges, des agents d'accrochage, des agents photoprotecteurs, des stabilisants ainsi que des matières qui influencent la rhéologie et l'écoulement.

4. Procédé pour la préparation d'un revêtement en poudre à effet selon au moins l'une des revendications 1 à 3, **caractérisé en ce qu'**on peut transformer les polymères à cristaux liquides cholestériques non durcissables et éventuellement les polymères à cristaux liquides nématiques non durcissables directement, au cours de leur synthèse ou dans un procédé ultérieur, en une poudre finement divisée, que l'on applique sur l'objet à revêtir à l'aide d'un procédé de laquage en poudre et que l'on transforme par un traitement thermique en un film présentant une perception de couleur dépendant de l'angle d'observation.

5. Procédé selon la revendication 4, **caractérisé en ce qu'**on prépare les polymères à cristaux liquides cholestériques non durcissables et éventuellement les polymères à cristaux liquides nématiques non durcissables sous forme de poudre par polymérisation en une phase émulsionnée ou dispersée.

6. Procédé selon la revendication 4, **caractérisé en ce qu'**on transforme les polymères à cristaux liquides cholestériques non durcissables et éventuellement les polymères à cristaux liquides nématiques après leur synthèse, à l'aide d'un procédé de broyage, en une poudre finement divisée.

7. Procédé selon une ou plusieurs des revendications 4 à 6, **caractérisé en ce qu'**on applique la poudre finement divisée à l'aide du procédé corona, d'un procédé triboélectrique ou électrocinétique, d'un procédé de pistolage à la flamme ou d'un procédé de frittage en lit fluidisé, sur l'objet à revêtir.

8. Procédé selon une ou plusieurs des revendications 4 à 7, **caractérisé en ce qu'**on réalise le revêtement en poudre à effet sur un subjectile ou peinture d'apprêt foncés, de préférence noirs.

9. Procédé selon une ou plusieurs des revendications 4 à 8, **caractérisé en ce que** le revêtement en poudre à effet est revêtu d'une ou plusieurs couches de vernis clair.

10. Utilisation d'un revêtement en poudre à effet selon une ou plusieurs des revendications 1 à 3 pour le revêtement de matières naturelles ou synthétiques.

11. Utilisation selon la revendication 10, **caractérisée en ce que** les matières à revêtir sont des objets en métal ou matières plastiques.

12. Utilisation selon la revendication 10, **caractérisée en ce que** les objets à revêtir sont des carosseries ou des pièces de carrosserie de véhicules automobiles.

## Revendications (Revendications pour l'(les) Etat(s) contractant(s) suivant(s): DE)

1. Revêtement en poudre à effet présentant une perception de couleur dépendant de l'angle d'observation, constitué essentiellement d'un ou plusieurs polymères à cristaux liquides cholestériques non durcissables, ou essentiellement d'au moins un polymère à cristaux liquides nématiques non durcissable et d'au moins un polymère à cristaux liquides cholestériques non durcissable, **caractérisé en ce que** le polymère à cristaux liquides cholestériques non durcissable est un polymère à cristaux liquides cholestériques à groupements latéraux, qui présente dans la chaîne principale des polysiloxanes, des siloxanes cycliques, des polyacrylates et/ou polyméthacrylates sous forme non durcissable et dans les chaînes latérales des groupes mésogènes, ou est un polymère à cristaux liquides cholestériques à chaîne principale, lequel est constitué essentiellement
a) de 0 à 99 % molaires d'au moins un composé pris dans le groupe des acides hydroxycarboxyliques aromatiques, des acides hydroxycarboxyliques cycloaliphatiques et des acides aminocarboxyliques aromatiques ;
b) de 0 à 49,5 % d'au moins un composé pris dans le groupe des acides dicarboxyliques aromatiques et des acides dicarboxyliques cycloaliphatiques ;
c) de 0 à 49,5 % d'au moins un composé pris dans le groupes des diols aromatiques, diols cycloaliphatiques et diamines aromatiques ;
d) de 1 à 40 % molaires de comonomères bifonctionnels chiraux ; et
e) de 0 à 5 % molaires d'un constituants ramifiable possédant plus de deux groupes fonctionnels, la somme donnant 100 % molaires, ou d'une combinaison de ces constituants.

2. Revêtement en poudre à effet selon la revendication 1, **caractérisé en ce que** le comonomère bifonctionnel chiral représente un ou plusieurs composés de formules 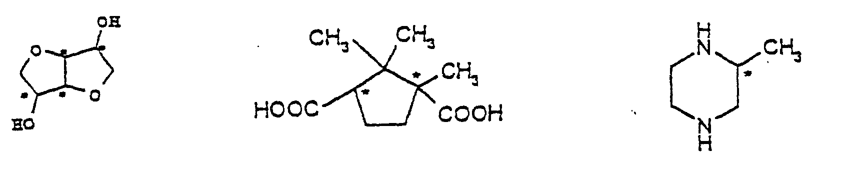 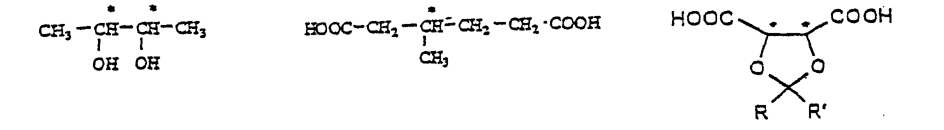 et 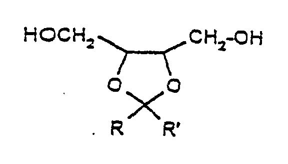 R et R' représentant chacun, indépendamment l'un de l'autre, un atome d'hydrogène, des groupes alkyle en C₁-C₆ ou phényle.

3. Revêtement en poudre à effet selon la revendication 1 ou 2, caractérisé en qu'il contient d'autres matières d'addition, qui ne sont pas des cristaux liquides, prises dans le groupe des pigments d'absorption et/ou d'interférence, des agents de contrôle de charge, des charges, des agents d'accrochage, des agents photoprotecteurs, des stabilisants ainsi que des matières qui influencent la rhéologie et l'écoulement.

4. Procédé pour la préparation d'un revêtement en poudre à effet selon au moins l'une des revendications 1 à 3, **caractérisé en ce qu'**on peut transformer les polymères à cristaux liquides cholestériques non durcissables et éventuellement les polymères à cristaux liquides nématiques non durcissables directement, au cours de leur synthèse ou dans un procédé ultérieur, en une poudre finement divisée, que l'on applique sur l'objet à revêtir à l'aide d'un procédé de laquage en poudre et que l'on transforme par un traitement thermique en un film présentant une perception de couleur dépendant de l'angle d'observation.

5. Procédé selon la revendication 4, **caractérisé en ce qu'**on prépare les polymères à cristaux liquides cholestériques _non durcissables et éventuellement les polymères à cristaux liquides nématiques non durcissables sous forme de poudre par polymérisation en une phase émulsionnée ou dispersée.

6. Procédé selon la revendication 4, **caractérisé en ce qu'**on transforme les polymères à cristaux liquides cholestériques non durcissables et éventuellement les polymères à cristaux liquides nématiques, après leur synthèse à l'aide d'un procédé de broyage, en une poudre finement divisée.

7. Procédé selon une ou plusieurs des revendications 4 à 6, **caractérisé en ce qu'**on applique la poudre finement divisée à l'aide du procédé corona, d'un procédé triboélectrique ou électrocinétique, d'un procédé de pistolage à la flamme ou d'un procédé de frittage en lit fluidisé, sur l'objet à revêtir.

8. Procédé selon une ou plusieurs des revendications 4 à 7, **caractérisé en ce qu'**on réalise le revêtement en poudre à effet sur un subjectile ou penture d'apprêt foncés, de préférence noirs.

9. Procédé selon une ou plusieurs des revendications 4 à 8, **caractérisé en ce que** le revêtement en poudre à effet est revêtu d'une ou plusieurs couches de vernis clair.

10. Utilisation d'un revêtement en poudre à effet selon une ou plusieurs des revendications 1 à 3 pour le revêtement de matières naturelles ou synthétiques.

11. Utilisation selon la revendication 10, **caractérisée en ce que** les matières à revêtir sont des objets en métal ou matières plastiques.

12. Utilisation selon la revendication 10, **caractérisée en ce que** les objets à revêtir sont des carosseries ou des pièces de carrosserie de véhicules automobiles.
